(19) **Europäisches Patentamt / European Patent Office / Office européen des brevets**

(11) **EP 2 825 585 B1**

(12) **EUROPEAN PATENT SPECIFICATION**

(45) Date of publication and mention
of the grant of the patent:
**08.07.2020 Bulletin 2020/28**

(51) Int Cl.:
*C08J 9/00* *(2006.01)*       *C08L 23/00* *(2006.01)*
*C08K 5/01* *(2006.01)*

(21) Application number: **12871149.6**

(86) International application number:
**PCT/CN2012/072418**

(22) Date of filing: **16.03.2012**

(87) International publication number:
**WO 2013/134945 (19.09.2013 Gazette 2013/38)**

(54) **FOAMABLE COMPOSITIONS, FOAMS AND ARTICLES THEREOF**

SCHÄUMBARE ZUSAMMENSETZUNGEN, SCHAUMSTOFFE UND DARAUS HERGESTELLTE ARTIKEL

COMPOSITIONS POUVANT FORMER DE LA MOUSSE, MOUSSES ET ARTICLES CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.01.2015 Bulletin 2015/04**

(73) Proprietor: **Dow Global Technologies LLC**
**Midland, MI 48674 (US)**

(72) Inventors:
• **CHEN, Yong**
**Changchun**
**Jilin 130022 (CN)**
• **WANG, David**
**Shanghai 210009 (CN)**
• **REGO, Jose M.**
**Houston, Texas 77041 (US)**
• **KUMMER, Kyle G.**
**Lake Jackson, Texas 77566 (US)**
• **WALTON, Kim L.**
**Lake Jackson, Texas 77566 (US)**

(74) Representative: **V.O.**
**P.O. Box 87930**
**2508 DH Den Haag (NL)**

(56) References cited:
WO-A1-2006/099631       WO-A1-2008/067503
WO-A1-2009/097560       US-A1- 2009 105 417
US-B2- 7 858 706

EP 2 825 585 B1

**Description**

FIELD OF THE INVENTION

This invention relates to the use of foams comprising polyolefin blends for the manufacture of wetsuits.

BACKGROUND OF THE INVENTION

Conventional wetsuits which have heretofore been employed for skin-diving, scuba-diving, surfing, fishing, kayaking and other such activities are generally laminates made of materials comprising a closed-cell sponge sheet as a core layer and stretch fabrics adhesively bonded to the sheet at one or two surfaces. The sponge sheet provides good heat retention properties and good workability for movement of human body. Neoprene (chloroprene rubber - CR) has been the dominate material for about 60 years for making the foam due to excellent softness, flexibility, handfeel, mechanical strength (such as low compression set), weatherability, insulation and waterproof properties. A nylon jersey or tricot having good stretchability provides good wearability for the wet suit. The exterior surface of the laminate is smooth or embossed and usually adhesive coated with a polyurethane film that provides water-repellence, durability, and colorance.

It would be useful to provide a lighter, chlorine free material suitable for wetsuits, particularly for sustainability reasons.

US 7,858,706 B2 discloses a foamable composition comprising olefin block copolymer having a Mw/Mn from 1.7 to 3.5, and at least one melting point, Tm, in degrees Celsius, and a density, d, in grams/cubic centimeter, wherein the numerical values of Tm and d correspond to the relationship: $Tm > -2002.9 + 4538.5(d) - 2422.2(d)^2$; ethylene-vinyl acetate copolymer; a crosslinking agent; and a blowing agent, wherein the olefin block copolymer is oil-extended.

US 2009/0105417 discloses blends of olefin block copolymers as described above with ethylene-propylene-diene monomer rubber (EPDM) or ethylene/$\alpha$-olefin copolymer and their use in a foamable composition.

WO 2006/099631 discloses a foamable composition comprising an olefin block copolymer as described herein above; a second polymer component such as ethylene-vinyl acetate, interpolymers derived from olefins or interpolymers derived from olefins and other polymers; a crosslinking agent; a blowing agent; and an oil additive. The preparation of laminates and articles from the foamable composition is also described.

WO 2009/097560 describes ethylene/ $\alpha$-olefin block interpolymers and articles made therefrom.

SUMMARY OF THE INVENTION

The invention provides the use of a foamable composition for the manufacture of wetsuits, said foamable composition comprising:

a) one or more olefin block copolymers having hard blocks in which ethylene is present in an amount greater than 95 weight percent based on the weight of the polymer, and soft blocks in which the comonomer content, corresponding to the content of monomers other than ethylene) is greater than 5 weight percent based on the weight of the polymer, said olefin block copolymer(s) having a Mw/Mn from 1.7 to 3.5, and at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2;$$

b) one or more olefin copolymers;
c) an oil;
d) a crosslinking agent; and
e) a blowing agent;

wherein the olefin copolymer comprises ethylene-propylene-diene monomer rubber and/or an ethylene/$\alpha$-olefin copolymer,
wherein said molecular weight distribution Mw/Mn is determined by gel permeation chromatography as described herein; said density, d, is measured according to ASTM 792; and said melting point, Tm, is determined via Differential Scanning Calorimetry as described herein.

The invention also provides for the use of a foam and the use of a laminate, respectively for the manufacture of a wetsuit, which foam is made from the foamable composition and is a constituent of the laminate. The invention further provides a wetsuit comprising said foam.

## DETAILED DESCRIPTION OF THE INVENTION

"Polymer" means a polymeric compound prepared by polymerizing monomers, whether of the same or a different type. The generic term "polymer" embraces the terms "homopolymer," "copolymer," "terpolymer" as well as "interpolymer".

"Interpolymer" means a polymer prepared by the polymerization of at least two different types of monomers. The generic term "interpolymer" includes the term "copolymer" (which is usually employed to refer to a polymer prepared from two different monomers), as well as the term "terpolymer" (which is usually employed to refer to a polymer prepared from three different types of monomers). It also encompasses polymers made by polymerizing four or more types of monomers.

The term "crystalline", if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetric (DSC) or equivalent technique.

The foams and foamable compositions underlying the present invention comprise an olefin block copolymer. The term "olefin block copolymer" or "OBC" is an ethylene/$\alpha$-olefin multi-block copolymer and includes ethylene and one or more copolymerizable $\alpha$-olefin comonomer in polymerized form, characterized by multiple blocks or segments of two or more polymerized monomer units differing in chemical or physical properties. The terms "interpolymer" and "copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

$$AAA-AA-BBB-BB$$

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more subsegments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an $\alpha$-olefin having 3 or more carbon atoms. For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units in which ethylene is present in an amount greater than 95 weight percent, even greater than 98 weight percent based on the weight of the polymer. In other words, the comonomer content (content of monomers other than ethylene) in the hard segments is less than 5 weight percent, even less than 2 weight percent based on the weight of the polymer. In some embodiments, the hard segments include all, or substantially all, units derived from ethylene. "Soft" segments are blocks of polymerized units in which the comonomer content (content of monomers other than ethylene) is greater than 5 weight percent, even greater than 8 weight percent, greater than 10 weight percent, and even greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, and even greater than 60 weight percent.

The term 'delta comonomer' means the difference in mole percent comonomer between the hard segment and the soft segment of the olefin block copolymer. In some embodiments, the delta comonomer is greater than 18.5 mol%, greater than 20 mol% or greater than 30 mol%. The delta comonomer can be from 18.5 mol% to 70 mol%, from 20 mol% to 60 mol% or from 30 mol% to 50 mol%. The delta comonomer can be measured using $^{13}$C NMR such as described below and in US Patent No. 7,947,793. The term, "mesophase separation" means a process in which polymeric blocks are locally segregated to form ordered domains. Crystallization of the ethylene segments in these systems is primarily constrained to the resulting mesodomains and such systems may be referred to as "mesophase separated". These mesodomains can take the form of spheres, cylinders, lamellae, or other morphologies known for block copolymers. The narrowest dimension of a domain, such as perpendicular to the plane of lamellae, is generally greater than about 40 nm in the mesophase separated block copolymers underlying the instant invention. In some embodiments, the olefin block copolymer is mesophase separated.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/α-Olefin Block Inter-polymers," filed on March 15, 2006, in the name of Colin L. P. Shan, Lonnie Hazlitt, et. al. and assigned to Dow Global Technologies Inc. In particular, hard and soft segment weight percentages and comonomer content may be determined as described in column 57 to column 63 of US 7,608,668.

The olefin block copolymer is a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), region-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due to the effect of the shuttling agent(s) in combination with multiple catalysts used in their preparation.

In an embodiment, the OBC underlying the foamable composition is produced in a continuous process and possesses a polydispersity index, PDI, from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution, rather than a Poisson distribution. The OBC has both a polydisperse block distribution, as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238.

In an embodiment, the olefin block copolymer possesses a most probable distribution of block lengths. The olefin block copolymer is defined as having:

(A) Mw/Mn from 1.7 to 3.5, at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2.$$

The olefin block copolymer may also have:

(B) Mw/Mn from 1.7 to 3.5, and be characterized by a heat of fusion, ΔH in J/g, and a delta quantity, ΔT, in degrees Celsius defined as the temperature difference between the tallest DSC peak and the tallest Crystallization Analysis Fractionation ("CRYSTAF") peak, wherein the numerical values of ΔT and ΔH have the following relationships:

$$\Delta T > -0.1299 \, \Delta H + 62.81$$

for ΔH greater than zero and up to 130 J/g

$$\Delta T \geq 48°C$$

for ΔH greater than 130 J/g wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/α-olefin interpolymer, and have a density, d, in grams/cubic centimeter, wherein the numerical values of Re and d satisfy the following relationship when ethylene/α-olefin interpolymer is substantially free of crosslinked phase:

$$Re > 1481 – 1629(d);$$

and/or

(D) a molecular fraction which elutes between 40°C and 130°C when fractionated using TREF, characterized in that the fraction has a molar comonomer content greater than, or equal to, the quantity (-0.2013) T + 20.07, more preferably greater than or equal to the quantity (-0.2013) T+ 21.07, where T is the numerical value of the peak elution temperature of the TREF fraction, measured in °C; and/or

(E) a storage modulus at 25°C, G'(25°C), and a storage modulus at 100°C, G'(100°C), wherein the ratio of G'(25°C) to G'(100°C) is in the range of 1:1 to 9:1.

The olefin block copolymer may also have:

(F) a molecular fraction which elutes between 40°C and 130°C when fractionated using TREF, characterized in that the fraction has a block index of at least 0.5 and up to 1 and a molecular weight distribution, Mw/Mn, greater than 1.3; and/or

(G) average block index greater than zero and up to 1.0 and a molecular weight distribution, Mw/Mn greater than 1.3. It is understood that the olefin block copolymer defined herein above may have one, some, all, or any combination of properties (B)-(G). Block Index can be determined as described in detail in US Patent No. 7,608,668 herein incorporated by reference for that purpose. Analytical methods for determining properties (A) through (G) are disclosed in, for example, US Patent No 7,608,668, col. 31, line 26 through col. 35, line 44.

Suitable monomers for use in preparing the OBC include ethylene and one or more addition polymerizable monomers other than ethylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

The olefin block copolymer has a density of from 0.850 to 0.925 g/cm³ (g/cc), or from 0.860 to 0.88 g/cm³ (g/cc) or from 0.860 to 0.879 g/cm³ (g/cc). The OBC has a Shore A value of 40 to 70, preferably from 45 to 65 and, more preferably, from 50 to 65. In an embodiment, the olefin block copolymer has a melt index (MI) from 0.1 g/10 min to 30 g/10, or from 0.1 g/10 min to 20 g/10 min, or from 0.1 g/10 min to 15 g/10 min, as measured by ASTM D 1238 (190°C/2.16 kg). The olefin block copolymer is present in an amount of 5 wt% to 45 wt%, preferably 10 wt% to 30 wt%, more preferably 10 wt% to 25 wt%. The composition may comprise more than one olefin block copolymer.

The olefin block copolymers are produced via a chain shuttling process such as described in US Patent No. 7,858,706. In particular, suitable chain shuttling agents and related information are listed in col. 16, line 39 through col. 19, line 44. Suitable catalysts are described in col. 19, line 45 through col. 46, line 19 and suitable co-catalysts in col. 46, line 20 through col. 51 line 28. The process is described throughout the document, but particularly in col. 51, line 29 through col. 54, line 56. The process is also described, for example, in the following: US Patent Nos. 7,608,668; US 7,893,166; and US 7,947,793.

The foams and foamable compositions underlying the present invention also include the olefin copolymer(s) ethylene-propylene-diene monomer rubber (EPDM) and/or ethylene/alpha-olefin (EAO) copolymer. In some embodiments, the olefin copolymer is an ethylene/α-olefin copolymer, preferably an ethylene/octene copolymer. Such polymers are commercially available under the tradenames ENGAGE (The Dow Chemical Company) and EXACT (ExxonMobil Chemical Company). The olefin copolymer has a density of 0.850 to 0.908 g/cm$^3$ (g/cc), preferably from 0.850 to 0.900 g/cm$^3$ (g/cc) and a Shore A value of 40 to 70, preferably from 45 to 65 and more preferably from 50 to 65. The olefin copolymer can be present in an amount up to 60 wt%, 15 wt% to 60 wt%, preferably 20 wt% to 60 wt%, more preferably 30 wt% to 55 wt%, based on total weight of the composition.

In an embodiment, the foam or foamable composition comprises an ethylene-propylene-diene monomer rubber (EPDM). EPDM materials are linear interpolymers of ethylene, propylene, and a nonconjugated diene such as 1,4-hexadiene, dicyclopentadiene, or ethylidene norbornene. A preferred class of interpolymers having the properties disclosed herein is obtained from polymerization of ethylene, propylene, and a non-conjugated diene to make an EPDM elastomer. Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

In some embodiments, the EPDM polymers have an ethylene content of from 50% to 75% by weight, a propylene content of from 20% to 49% by weight, and a nonconjugated diene content from 1% to 10% by weight, all weights based upon the total weight of the polymer. Examples of representative EPDM polymers for use include Nordel IP 3640, Nordel IP 4520 and Nordel IP 4570 available from The Dow Chemical Company, Midland, MI, Vistalon 2504 available from ExxonMobil, Baton Rouge, LA, and Keltan 4550 available from DSM Elastomers Americas, Addis, LA.

The EPDM polymers, also known as elastomeric copolymers of ethylene, a higher-alpha-olefin and a polyene, have molecular weights from 20,000 to 2,000,000 daltons or more. Their physical form varies from waxy materials to rubbers to hard plastic-like polymers. They have dilute solution viscosities (DSV) from 0.5 to 10 dl/g, measured at 30 °C on a solution of 0.1 gram of polymer in 100 cm$^3$ (cc) of toluene. The EPDM polymers also have a Mooney viscosity of 10 to 100 ML(1+4) at 125 °C, preferably from 10 to 70 ML(1+4) at 125 °C or 10 to 50 ML(1+4) at 125 °C. The EPDM polymers have a density of 0.850 to 0.90 g/cm$^3$ (g/cc), from 0.855 to 0.885 g/cm$^3$ (g/cc) or from 0.860 to 0.880 g/cm$^3$ (g/cc).

In some embodiments, the EPDM has a crystallinity of less than 10% as measured by DSC, preferably greater than 0 % to 10%, from 0.001 % to 10% or from 0.001 % to 5%.

In some embodiments, the EPDM is present in an amount of 0 wt% to 50 wt%, preferably 5 wt% to 40 wt%, more preferably 5wt% to 30 wt% based on total weight of the composition.

The composition can also include a styrenic block copolymer. Generally speaking, styrenic block copolymers include at least two monoalkenyl arene blocks, preferably two polystyrene blocks, separated by a block of a saturated conjugated diene, preferably a saturated polybutadiene block. The preferred styrenic block copolymers have a linear structure, although branched or radial polymers or functionalized block copolymers make useful compounds. The total number average molecular weight of the styrenic block copolymer is preferably from 30,000 to 250,000 if the copolymer has a linear structure. Such block copolymers may have an average polystyrene content from 10% by weight to 40% by weight. Suitable block copolymers having unsaturated rubber monomer units include, but are not limited to, styrene-butadiene (SB), styrene-ethylene/butadiene (SEB), styrene-isoprene(SI), styrene-butadiene-styrene (SBS), styrene-isoprene-styrene (SIS), α-methylstyrene-butadiene-α-methylstyrene and α-methylstyrene-isoprene-α-methylstyrene. The stryenic block copolymer can be present in an amount of 0 wt% to 50 wt%, preferably 5 wt% to 40 wt%, more preferably 5wt% to 30 wt% based on total weight of the composition.

The composition may also include an acrylonitrile-butadiene rubber, silicon rubber or a chlorinated polyethylene rubber that may be present in amounts of 0 wt% to 50 wt%, preferably 5 wt% to 40 wt%, more preferably 5wt% to 30 wt% based on total weight of the composition

The composition includes an oil. The oil can be an aromatic oil, a mineral oil, a napththenic oil, a paraffinic oil, a triglyceride-based vegetable oil such as castor oil, a synthetic hydrocarbon oil such as polypropylene oil, a silicone oil, or any combination thereof. A nonlimiting example of a suitable oil is a white mineral oil sold under the tradename HYDROBRITE® 550 (Sonneborn). The oil is present in an amount of 10 wt% to 45 wt%, preferably 20 wt% to 40 wt%, more preferably 25 wt% to 35 wt% based on total weight of the composition.

The foams underlying the present invention and disclosed herein can be prepared from a foamable composition as described above comprising at least one blowing agent, at least one cross-linking agent and, optionally, at least one other additive or a combination thereof. Non-limiting examples of suitable other additives include grafting initiators, cross-linking catalysts, blowing agent activators (*e.g.,* zinc oxide, zinc stearate and the like), coagents (*e.g.,* triallyl cyanurate, trimethylolpropane trimethylacrylate), plasticizers, colorants or pigments, stability control agents, nucleating agents, fillers, antioxidants, acid scavengers, ultraviolet stabilizers, flame retardants, lubricants, processing aids, extrusion aids, and combinations thereof. Some suitable additives have been described in Zweifel Hans et al., "Plastics Additives Handbook," Hanser Gardner Publications, Cincinnati, Ohio, 5th edition (2001). The blowing agent is present in an amount of 1phr to 8 phr, preferably 2 phr to 6 phr. The crosslinking agent is present in an amount of 1 phr to 6 phr, preferably 2 phr to 5 phr. When present, blowing agent activators can be present in an amount of greater than 0 phr to 2.0 phr, preferably 0.05 phr to 1.0 phr. When present, filler can be present in an amount of greater than 0 phr to 20 phr, preferably 0.05 phr to 10 phr. When present, processing aids can be present in an amount of 0.1 phr to 2.0 phr; antioxidant in an amount of 0.1 phr to 1.0 phr; and, UV stabilizer in an amount of 0.1 phr to 1.0 phr. The term "phr" means parts per hundred resin, as commonly understood in the art.

The foams can be substantially cross-linked. A foam is substantially cross-linked when the foam contains more than 5 % of gel per ASTM D-2765-84 Method A. In some embodiments, the foam disclosed herein contains more than 5 % of gel, more than 10 % of gel, more than 15 % of gel, more than 20 % of gel, more than 25 % of gel, more than 30 % of gel, more than 35 % of gel, or more than 40 % of gel per ASTM D-2765-84 Method A. In other embodiments, the foam contains less than 99 % of gel. In further embodiments, the foam contains less than 85 % of gel. In further embodiments, the foam disclosed herein contains less than 75 % of gel. The foam can have from 5% of gel to 99 % of gel, 15% of gel to 85% of gel, or from 25% of gel to 75% of gel.

The foams or foamable compositions disclosed herein can have a density of 0.05 to 0.2 g/cm$^3$ (g/cc), preferably 0.06 to 0.16 g/cm$^3$ (g/cc), more preferably 0.08 to 0.16 g/cm$^3$ (g/cc), as measured according to ASTM 792. The foams can have a 60% modulus of 0.60 kg/cm$^2$ to 1.50 kg/cm$^2$, preferably 0.60 kg/cm$^2$ to 0.8 kg/cm$^2$, more preferably 0.65 kg/cm$^2$ to 0.75 kg/cm$^2$. The foams can have a compression set of 15% to 35%, preferably 15% to 30%.

The foams or foamable compositions disclosed herein can be either closed-celled or open-celled. A foam is a closed cell foam when the foam contains 80 % or more closed cells or less than 20 % open cells according to ASTM D2856-A.

The blowing agents suitable for making the foams disclosed herein can include, but are not limited to, inorganic blowing agents, organic blowing agents, chemical blowing agents and combinations thereof. Some blowing agents are disclosed in Sendijarevic et al., "Polymeric Foams And Foam Technology," Hanser Gardner Publications, Cincinnati, Ohio, 2nd edition, Chapter 18, pages 505-547 (2004).

Non-limiting examples of suitable inorganic blowing agents include carbon dioxide, nitrogen, argon, water, air, nitrogen, and helium. Non-limiting examples of suitable organic blowing agents include aliphatic hydrocarbons having 1-6 carbon atoms, aliphatic alcohols having 1-3 carbon atoms, and fully and partially halogenated aliphatic hydrocarbons having 1-4 carbon atoms. Non-limiting examples of suitable aliphatic hydrocarbons include methane, ethane, propane, n-butane, isobutane, n-pentane, isopentane, neopentane, and the like. Non-limiting examples of suitable aliphatic alcohols include methanol, ethanol, n-propanol, and isopropanol. Non-limiting examples of suitable fully and partially halogenated aliphatic hydrocarbons include fluorocarbons, chlorocarbons, and chlorofluorocarbons. Non-limiting examples of suitable fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane. Non-limiting examples of suitable partially halogenated chlorocarbons and chlorofluorocarbons include methyl chloride, methylene chloride, ethyl chloride, 1,1,1-trichloroethane, 1,1-dichloro-1-fluoroethane (HCFC-141b), 1-chloro-1,1 difluoroethane (HCFC-142b), 1,1-dichloro-2,2,2-trifluoroethane (HCFC-123) and 1-chloro-1,2,2,2-tetrafluoroethane(HCFC-124). Non-limiting examples of suitable fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Non-limiting examples of suitable chemical blowing agents include azodicarbonamide, azodiisobutyronitrile, benezenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, and trihydrazino triazine. In some embodiments, the blowing agent is azodicarbonamide isobutane, CO$_2$, or a mixture of thereof. Preferably, the blowing agent has a decomposition temperature of 150 °C to 210 °C.

The cross-linking of the foams can be induced by activating the cross-linking agent in the foamable composition. The cross-linking agent can be activated by exposing it to a temperature above its decomposition temperature. Alternatively, the cross-linking agent can be activated by exposing it to a radiation that causes the generation of free radicals from the cross-linking agent. Similarly, the foaming or expansion of the foams can be induced by activating the blowing agent in the foamable composition. In some embodiments, the blowing agent is activated by exposing it to a temperature above its activation temperature. Generally, the activations of the cross-linking and foaming can occur either simultaneously or sequentially. In some cases, the activation of the cross-linking occurs first and the activation of the foaming occurs next. In other cases, the activation of the foaming occurs first and the activation of the cross-linking occurs next.

The foamable composition can be prepared or processed at a temperature of less than 150 °C to prevent the decomposition of the blowing agent and the cross-linking agent. When radiation cross-linking is used, the foamable composition can be prepared or processed at a temperature of less than 160 °C to prevent the decomposition of the blowing agent. In some cases, the foamable composition can be extruded or processed through a die of desired shape to form a foamable structure. Next, the foamable structure can be expanded and cross-linked at an elevated temperature (*e.g.,* from 150 °C to 250 °C) to activate the blowing agent and the cross-linking agent to form a foam structure. In some cases, the foamable structure can be irradiated to cross-link the polymer material, which can then be expanded at the elevated temperature as described above.

Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001); Encyclopedia of Chemical Technology, Vol. 17, 2nd edition, Interscience Publishers (1968); and Daniel Seern, "Organic Peroxides," Vol. 1, Wiley-Interscience, (1970).

Non-limiting examples of suitable cross-linking agents include peroxides, phenols, azides, aldehyde-amine reaction products, substituted ureas, substituted guanidines; substituted xanthates; substituted dithiocarbamates; sulfur-containing compounds, such as thiazoles, sulfenamides, thiuramidisulfides, paraquinonedioxime, dibenzoparaquinonedioxime, sulfur; imidazoles; silanes and combinations thereof.

Non-limiting examples of suitable organic peroxide cross-linking agents include alkyl peroxides, aryl peroxides, peroxyesters, peroxycarbonates, diacylperoxides, peroxyketals, cyclic peroxides and combinations thereof. In some embodiments, the organic peroxide is dicumyl peroxide, t-butylisopropylidene peroxybenzene, 1,1-di-t-butyl peroxy-3,3,5-trimethylcyclohexane, 2,5-dimethyl-2,5-di(t-butyl peroxy) hexane, t-butyl-cumyl peroxide, di-t-butyl peroxide, 2,5-dimethyl-2,5-di-(t-butyl peroxy) hexyne or a combination thereof. In one embodiment, the organic peroxide is dicumyl peroxide. Additional teachings regarding organic peroxide cross-linking agents are disclosed in C. P. Park, "Polyolefin Foam", Chapter 9 of Handbook of Polymer Foams and Technology, edited by D. Klempner and K. C. Frisch, Hanser Publishers, pp. 198-204, Munich (1991).

Optionally, the foamable composition may comprise a catalyst. Any cross-linking catalyst that can promote the cross-linking of the ethylene/$\alpha$-olefin interpolymer or the polymer blend can be used. Non-limiting examples of suitable catalysts include organic bases, carboxylic acids, and organometallic compounds. In some embodiments, the catalyst includes organic titanates and complexes or carboxylates of lead, cobalt, iron, nickel, zinc and tin. In other embodiments, the catalyst is or comprises dibutyltin dilaurate, dioctyltin maleate, dibutyltin diacetate, dibutyltin dioctanoate, stannous acetate, stannous octanoate, lead naphthenate, zinc caprylate, cobalt naphthenate or a combination thereof. In further embodiments, the catalyst is or comprises a tin carboxylate such as dibutyltin dilaurate and dioctyltin maleate.

Alternatively, the cross-linking of the foams or foamable compositions can be effected by using radiation. Non-limiting examples of suitable radiation include electron beam or beta ray, gamma rays, X-rays, or neutron rays. Radiation is believed to activate the cross-linking by generating radicals in the polymer which may subsequently combine and cross-link. Additional teachings concerning radiation cross-linking are disclosed in C. P. Park, *supra,* pages 198-204. In some embodiments, the foam or foamable composition is not cross-linked by radiation.

Radiation dosage generally depends upon many factors. Those skilled in the art will be readily able to select suitable radiation levels based on thickness and geometry of the article to be irradiated, as well as the characteristics of the foamable composition or components, such as molecular weight, molecular weight distribution, comonomer content, the presence of cross-linking enhancing coagents, and additives (*e.g.,* oil). In general, the dosage does not exceed what is required to effect the desired level of cross-linking. In some embodiments, the dosage causes more than 5 % gel in the foam per ASTM D-2765-84 Method A.

In some embodiments, dual cure systems, which comprises at least two activation methods selected from cross-linking agents and radiation, can be effectively employed. For instance, it may be desirable to employ a peroxide cross-linking agent in conjunction with a silane cross-linking agent, a peroxide cross-linking agent in conjunction with radiation, a sulfur-containing cross-linking agent in conjunction with a silane cross-linking agent.

The foams or foamable compositions may optionally comprise a stability control agent or gas permeation modifier. Any stability control agent that can enhance the dimensional stability of the foams can be used. Non-limiting examples of suitable stability control agents include amides and esters of $C_{10-24}$ fatty acids. Such agents are described in U.S. Patent Nos. 3,644,230 and 4,214,054. In some embodiments, the stability control agents include stearyl stearamide, glycerol monostearate, glycerol monobehenate, sorbitol monostearate and combinations thereof. In general, the amount of the stability control agents is from 0.1 to 10 parts, from 0.1 to 5 parts, or from 0.1 to 3 parts by weight per hundred parts by weight of the polymer. In some embodiments, the stability control agent is glycerol monostearate.

The foams or foamable compositions may optionally comprise a nucleating agent. Any nucleating agent that can control the size of foam cells can be used. Non-limiting examples of suitable nucleating agents include inorganic substances such as calcium carbonate, talc, clay, titanium oxide, silica, barium sulfate, diatomaceous earth, citric acid, sodium bicarbonate, sodium carbonate, and combinations thereof. In some embodiments, the nucleating agent is a combination of citric acid and sodium bicarbonate or a combination of citric acid and sodium carbonate. In other embodiments, the nucleating agent is HYDROCEROL® CF 20 from Clariant Corporation, Charlotte, NC. The amount of nucleating agent employed can range from 0.01 to 5 parts by weight per hundred parts by weight of the polymer.

In some embodiments, the foams or foamable compositions comprise an antioxidant. Any antioxidant that can prevent the oxidation of polymer components and organic additives in the foams can be added to the foams. Non-limiting examples of suitable antioxidants include aromatic or hindered amines such as alkyl diphenylamines, phenyl-$\alpha$-naphthylamine, alkyl or aralkyl substituted phenyl-$\alpha$-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (*e.g.,* IRGANOX™ 1010, from Ciba Geigy, New York); acryloyl modified phenols; octadecyl-3,5-di-t-butyl-4-hydroxycinnamate (*e.g.,* IRGANOX™ 1076, commercially available from Ciba Geigy); phosphites and phosphonites; hydroxylamines; benzofuranone derivatives; and combinations thereof. Some antioxidants have been described in Zweifel Hans et al., "Plastics Additives Handbook," Hanser Gardner Publications, Cincinnati, Ohio, 5th edition, Chapter 1, pages 1-140 (2001).

In other embodiments, the foams or foamable compositions comprise a UV stabilizer. Any UV stabilizer that may prevent or reduce the degradation of the foams by UV radiations can be added to the foams. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, the foams or foamable compositions comprise a colorant or pigment. Any colorant or pigment that can change the look of the foams to human eyes can be added to the foams. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or pigment in the foam can be from greater than 0 to 10 wt%, from 0.1 to 5 wt%, or from 0.25 to 2 wt% of the total weight of the foam. Some colorants have been described in Zweifel Hans et al., "Plastics Additives Handbook," Hanser Gardner Publications, Cincinnati, Ohio, 5th edition, Chapter 15, pages 813-882 (2001).

Optionally, the foams or foamable compositions can comprise a filler. Any filler which can be used to adjust, *inter alia,* volume, weight, costs, and/or technical performance can be added to the foams. Non-limiting examples of suitable fillers include talc, calcium carbonate, chalk, calcium sulfate, clay, kaolin, silica, glass, fumed silica, mica, wollastonite, feldspar, aluminum silicate, calcium silicate, carbon black, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

Optionally, the foams or foamable compositions can comprise a lubricant. Any lubricant that can be used, *inter alia,* to modify the rheology of the molten foamable compositions, to improve the surface finish of molded foamed articles, and/or to facilitate the dispersion of fillers or pigments can be added to the foams. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the foam can be from greater than 0 to 5 wt%, from 0.1 to 4 wt%, or from 0.1 to 3 wt% of the total weight of the foam. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

Optionally, the foams or foamable compositions can comprise an antistatic agent. Any antistatic agent that can increase the conductivity of the foams and to prevent static charge accumulation can be added to the foams. Non-limiting examples of suitable antistatic agents include conductive fillers (e.g., carbon black, metal particles and other conductive particles), fatty acid esters (e.g., glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the foam can be from greater than 0 to 5 wt%, from 0.01 to 3 wt%, or from 0.1 to 2 wt% of the total weight of the foam. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001).

The processes of making polyolefin foams are described in C. P. Park, "Polyolefin Foam", Chapter 9 of Handbook of Polymer Foams and Technology, edited by D. Klempner and K. C. Frisch, Hanser Publishers, Munich (1991).

The ingredients of the foamable composition can be mixed or blended in any suitable mixing or blending devices known to skilled artisans. The ingredients in the foamable composition can then be mixed at a temperature below the decomposition temperature of the blowing agent and the cross-linking agent to ensure that all ingredients are homogeneously mixed and remain intact. After the foamable composition is relatively homogeneously mixed, the composition is shaped and then exposed to conditions (*e.g.* heat, pressure, shear, *etc.*) over a sufficient period of time to activate the blowing agent and the cross-linking agent to make the foam.

In some cases, the ingredients of the foamable composition can be mixed and melt blended by any mixing or blending device known to a person of ordinary skill in the art. Non-limiting examples of suitable mixing or blending devices include extruders, mixers, blenders, mills, dispersers, homogenizers and the like. In other cases, the blowing agent is dry-blended with the ethylene/$\alpha$-olefin interpolymer or the polymer blend before the foamable composition is heated to a molten form. In further cases, the blowing agent is added when the foamable composition is in a molten phase. In some cases, the foamable composition is extruded through a die where the cross-linking is activated. Next, the extruded foamable composition may be exposed to an elevated temperature to activate the blowing agent to form the foams.

The foams can be prepared by conventional extrusion foaming processes. The foam can generally be prepared by heating the polymer components to form a plasticized or melt polymer material, incorporating therein a blowing agent to form a foamable composition, and extruding the foamable composition through a die to form foam products. Prior to mixing with the blowing agent, the polymers can be heated to a temperature at or above their glass transition temperatures or melting points. The blowing agent can be incorporated or mixed into the molten polymer by any means known in the art such as with an extruder, mixer, blender, and the like. The blowing agent can be mixed with the molten polymer at an elevated pressure sufficient to prevent substantial expansion of the molten polymer and to generally disperse the blowing agent homogeneously therein. Optionally, a nucleating agent can be blended in the polymer melt or dry blended with the polymer prior to plasticizing or melting. The foamable composition can be cooled to a lower temperature to optimize physical characteristics of the foam structure. The foamable composition can then be extruded or conveyed through a die of desired shape to a zone of reduced or lower pressure to form the foam structure. The zone of lower pressure can be at a pressure lower than that in which the foamable composition is maintained prior to extrusion through the die. The lower pressure can be superatmospheric or sub-atmospheric (vacuum), but is preferably at an atmospheric level.

In some cases, the foams are formed in a coalesced strand form by extrusion of the polymer through a multi-orifice die. The orifices can be arranged so that contact between adjacent streams of the molten extrudate occurs during the foaming process and the contacting surfaces adhere to one another with sufficient adhesion to result in a unitary foam structure. The streams of the molten extrudate exiting the die can take the form of strands or profiles, which can desirably foam, coalesce, and adhere to one another to form a unitary structure. Desirably, the coalesced individual strands or profiles should remain adhered in a unitary structure to prevent strand delamination under stresses encountered in preparing, shaping, and using the foams. Apparatuses and methods for producing foam structures in coalesced strand form are disclosed in U.S. Patent Nos. 3,573,152 and 4,824,720.

In other cases, the foams are formed by an accumulating extrusion process as seen in U.S. Patent No. 4,323,528. In the accumulating extrusion process, low density foams having large lateral cross-sectional areas are prepared by: 1) forming under pressure the foamable composition of the polymers and a blowing agent at a temperature at which the viscosity of the foamable composition is sufficient to retain the blowing agent when the foamable composition is allowed to expand; 2) extruding the foamable composition into a holding zone maintained at a temperature and pressure which does not allow the foamable composition to foam, the holding zone having an outlet die defining an orifice opening into a zone of lower pressure at which the foamable composition foams, and an openable gate closing the die orifice; 3) periodically opening the gate; 4) substantially concurrently applying mechanical pressure by a movable ram on the foamable composition to eject it from the holding zone through the die orifice into the zone of lower pressure, at a rate greater than that at which substantial foaming in the die orifice occurs and less than that at which substantial irregularities in cross-sectional area or shape occurs; and 5) permitting the ejected foamable composition to expand unrestrained in at least one dimension to produce the foam structure.

In some cases, the foams can be prepared by either compression molding or injection molding. In other cases, the foams are prepared by compression molding at a temperature above the decomposition temperatures of the peroxide and the blowing agent and under pressure for a defined time which is followed by an expansion step when the mold opens and pressure is released. In further cases, the foams are prepared by injection molding the compound comprising the polymers which melt at temperatures below the decomposition temperatures of the peroxide and the blowing agent into molds at temperatures above the decomposition temperatures of the peroxide and the blowing agent. The material remains at temperature and under pressure until the mold opens and the pressure is reduced at which point the material will expand.

Blending of the Ingredients Of the Foams

The ingredients of the foamable composition can be mixed or blended using methods known to a person of ordinary skill in the art. Non-limiting examples of suitable blending methods include melt blending, solvent blending, extruding, and the like.

In some cases, the ingredients of the foams are melt blended by a method as described by Guerin et al. in U.S. Patent No. 4,152,189. First, all solvents, if there are any, are removed from the ingredients by heating to an appropriate elevated temperature of 100°C to 200°C or 150°C to 175°C at a pressure of 5 torr (667 Pa) to 10 torr (1333 Pa). Next, the ingredients are weighed into a vessel in the desired proportions and the foam is formed by heating the contents of the vessel to a molten state while stirring.

In other cases, the ingredients of the foams are processed using solvent blending. First, the ingredients of the desired foam are dissolved in a suitable solvent and the mixture is then mixed or blended. Next, the solvent is removed to provide the foam.

In some cases, physical blending devices that can provide dispersive mixing, distributive mixing, or a combination of dispersive and distributive mixing can be used in preparing homogenous blends. Both batch and continuous methods of physical blending can be used. Non-limiting examples of batch methods include those methods using BRABENDER® mixing equipments (e.g., BRABENDER PREP CENTER®, available from C. W. Brabender Instruments, Inc., South Hackensack, N.J.) or BANBURY® internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some cases, the additives can be added into an extruder through a feed hopper or feed throat during the extrusion of the polymers or the foam. The mixing or blending of polymers by extrusion has been described in C. Rauwendaal, "Polymer Extrusion", Hanser Publishers, New York, NY, pages 322-334 (1986).

When one or more additives are required in the foams, the desired amounts of the additives can be added in one charge or multiple charges to any of the polymer components separately or together. Furthermore, the addition can take place in any order.

Embodiments of the invention also comprise wetsuits comprising the foam as described above. The wetsuits can be wetsuits for skin-diving, scuba-diving, surfing, fishing, kayaking and other such activities. Wetsuits can be constructed from the foam compositions by laminating the foams to appropriate fabrics via methods known in the art. Wetsuit articles are described in, for example, US Patent No. 3,660,849 and US Patent No. 4,274,158.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

## EXAMPLES

**Test Methods**

**Compression Set**

Compression set is measured based on ASTM D 395 method B. The sample thickness is around 19 mm, diameter 29±0.5 mm, cut from the foamed sheet with thickness 19±0.5 mm. The samples were tested under constant depression of 50% at around 23±1 °C for 23 hours and then taken out and relaxed at around 23±1 °C for 1 hour and then measured. Compression Set = [(original thickness-final thickness)/original thickness] x 100%.

**$^{13}$C NMR Analysis**

The samples are prepared by adding approximately 3g of a 50/50 mixture of tetrachloroethane-d$_2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}$C resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

**Density**

Samples for foam density measurement are prepared from the bun foams with or without a skin layer attached. The foam density is measured on using the bun foam sample after any integral skin layer is removed by accurately measuring the length (L) x width(W) and height (H) of the foam and the mass to the nearest 0.1g. The density is calculated by dividing the mass of the foam sample by the product of the L xW x H, all in centimeters.

The density of polymers may be measured by preparing the samples according to ASTM D 1928 and then measuring density within one hour of sample pressing according to ASTM D792, Method B.

**Melt Temperature, Tm, via DSC**

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to - 40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

**GPC (Mw/Mn determination)**

The gel permeation chromatographic system can be either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.

Polyethylene equivalent molecular weight calculations are performed using Viscotek TriSEC software Version 3.0.

**Table 1. Additional Test methods**

| Property | Unit | Method |
|---|---|---|
| Shore A/OOO | - | ASTM D-2240 |
| MI | g/10min | ASTM D-1238 (190°C/2.16 Kg) |
| Tensile strength | Kg/cm$^2$ | ASTM D638 |
| Ultimate Elongation | % | ASTM D638 |
| Tensile Secant Modulus (60% and 300%) | Kg/cm$^2$ | ASTM D638 |
| Tear strength | Kg/cm | ASTM D624, type C |
| Mooney viscosity | ML1+4, 125 deg C | ISO289 (or ASTM D1646) |

**Components**

- **POE: ENGAGE™ 8842:** density 0.857 g/cm$^3$ (ASTM D792), MI 1 g/10min (ASTM D1238, at 190 deg C/2.16Kg), Shore A = 54 (ASTM D2240).

- **OBC1: INFUSE™ 9807,** density 0.866 g/cm$^3$ (ASTM D792), MI 15 g/10min (ASTM D1238, at 190 deg C/2.16Kg), Shore A = 55 (ASTM D2240).

- **OBC2: INFUSE™ 9107,** density 0.866 g/cm$^3$ (ASTM D792), MI 1 g/10min (ASTM D1238, at 190 deg C/2.16Kg), Shore A = 60 (ASTM D2240).

- **OBC3:** density 0.870 g/cm$^3$ (ASTM D792), MI 0.5 g/10min (ASTM D1238, at 190 deg C/2.16Kg), Shore A = 51 (ASTM D2240); 1-octene content in the soft segment of 27 mol%.

- **Crosslinking agent:** Luperox™ DC40 SP2 (40 wt% active percent) from Arkema.

- **Mineral oil:** paraffin oil, Hydrobrite 550, available from SONNEBORN.

- **Blowing agent:** AC3000, from Kum Yang Chemical Company.

- **Mica:** particle size around 205 microns; locally sourced

- **ZnO:** zinc oxide; Horsehead Corporation

- **ZnSt:** zinc stearate; Fisher Scientific

- **EPDM1: Nordel™ IP 3430,** Mooney viscosity (ML1+4, 125 deg C) = 27 MU, available from The Dow Chemical Company.

- **EPDM2: Nordel™ IP 3640,** Mooney viscosity (ML1+4, 125 deg C) = 40 MU, available from The Dow Chemical Company.

- **Comparative A:** neoprene rubber foam

**Table 2. Inventive formulations for bun foam preparation**

| Example | OBC1 | OBC2 | OBC3 | POE | EPDM 1 | EPDM 2 | Mineral oil | Crosslinking agent | Blowing agent | Mica | ZnO | ZnSt |
|---|---|---|---|---|---|---|---|---|---|---|---|---|
| | wt% | wt% | wt% | wt% | wt% | wt% | wt% | PHR | PHR | PHR | PHR | PHR |
| 1 | 30.0 | / | 12.0 | / | 30.0 | / | 28.0 | 5.0 | 5.0 | 5.0 | 0.5 | 0.5 |
| 2 | / | / | 12.0 | 30.0 | 30.0 | / | 28.0 | 5.0 | 5.0 | 5.0 | 0.5 | 0.5 |
| 3 | / | / | 10.0 | 35.0 | / | 20.0 | 35.0 | 5.5 | 5.0 | 5.0 | 0.5 | 0.5 |
| 4 | / | 10.0 | / | 35.0 | / | 20.0 | 35.0 | 5.5 | 5.0 | 5.0 | 0.5 | 0.5 |
| 5 | / | / | 15.0 | 55.0 | / | / | 30.0 | 6.0 | 5.0 | 5.0 | 0.5 | 0.5 |
| PHR - parts per hundred of resin | | | | | | | | | | | | |

**Sample Preparation**

1. Batch Mixing

The ingredients were added to the Kobelco 3.5L internal mixer in the following order: Polymer followed by ZnO, ZnSt, Talc and Oil in 3 successive pours after the polymer melted. The blowing agent and peroxide were added next and mixed for an additional 3 to 5 minutes for a total mix time of 15 minutes keeping the batch temperature below 125°C. The resulting batch was finished on a two roll mill to completely mix any ingredients remaining on the surface when dropped from the mixer.

*2. Foam Preparation*

The finished milled blankets were cut into squares such that 200 grams would fit into the compression molding chase used to make the bun foams. The pre-foams were preheated for 8 minutes at 120°C and pressed at 18,144 kg (20 tons) for 4 minutes to form a solid mass in the mold before foaming. The preheated mass was transferred to the foaming press and held for 8 minutes at 455 MPa (66K psi) and 180°C. Once the pressure was released, the foam was removed, measured and allowed to cool. The foams were cut and sliced into thin layers or desired shape for testing.

**Table 3. Inventive Example foams vs. Comparative foam (3 mm foam sheet)**

| Example | Elongation at break | Tensile Strength at break | 60% modulus | 300% modulus | Density | Tear Strength | Compression Set |
|---|---|---|---|---|---|---|---|
| | (%) | (Kg/cm$^2$) | (Kg/cm$^2$) | (Kg/cm$^2$) | g/cm$^3$ (g/cc) | (Kg/cm) | % |
| 1 | 345.8 | 3.06 | 0.64 | 2.70 | 0.092 | 1.27 | 33 |
| 2 | 314.2 | 3.96 | 0.74 | 3.88 | 0.123 | 1.45 | 22 |
| 3 | 300.0 | 3.80 | 0.68 | 3.76 | 0.142 | 1.34 | 16 |
| 4 | 294.8 | 3.59 | 0.67 | 3.56 | 0.154 | 1.31 | 18 |
| 5 | 324.0 | 4.60 | 0.70 | 1.50 | 0.090 | 1.37 | 28 |
| Comparative A | > 400 | > 5.0 | 0.60-0.75 | >1.10 | 0.17-0.21 | >1.10 | 20-30 |

From the test results in Table 3, it can be seen that surprisingly lower density (light weight) foams made from the inventive formulations showed physical properties that are comparable to the benchmark neoprene foam, which is typical for wet suit applications, especially for the 60% modulus and compression set, which are key requirements for application such as wetsuits. Although the tensile strength and elongation are somewhat lower than that of the neoprene foam, these can be compensated for by laminating with elastic fabrics.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

**Claims**

**1.** Use of a foamable composition for the manufacture of wetsuits, said foamable composition comprising:

a) one or more olefin block copolymers having hard blocks in which ethylene is present in an amount greater than 95 weight percent based on the weight of the polymer, and soft blocks in which the comonomer content, corresponding to the content of monomers other than ethylene) is greater than 5 weight percent based on the weight of the polymer, said olefin block copolymer(s) having a Mw/Mn from 1.7 to 3.5, and at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2;$$

b) one or more olefin copolymers;
c) an oil;
d) a crosslinking agent; and
e) a blowing agent;

wherein the olefin copolymer comprises ethylene-propylene-diene monomer rubber and/or an ethylene/$\alpha$-olefin copolymer,
wherein said molecular weight distribution Mw/Mn is determined by gel permeation chromatography as described in the description; said density, d, is measured according to ASTM 792; and said melting point, Tm, is determined via Differential Scanning Calorimetry as described in the description.

2. Use of the foamable composition according to Claim 1, wherein one or more of the olefin block copolymers is mesophase separated and has a delta comonomer of greater than 18.5 mol%, wherein said delta comonomer is the difference, in mole percent comonomer, between the hard block and the soft block of the olefin block copolymer.

3. Use of the foamable composition according to Claim 1 or Claim 2 wherein

a) the olefin block copolymer is present in an amount of 5 wt% to 40 wt%, preferably 10 wt% to 30 wt%, more preferably 10 wt% to 25 wt%;
b) the ethylene-propylene-diene- monomer rubber is present in an amount of 5 wt% to 40 wt%, preferably 5 wt% to 30 wt%;
c) the mineral oil is present in an amount of 15 wt% to 45 wt%, preferably 20 wt% to 40 wt%, more preferably 25 wt% to 35wt%;
d) the crosslinking agent is present in an amount of 1 - 6 phr, preferably 2-5 phr.
e) the blowing agent is present in an amount of 1-8 phr, preferably 2-6 phr.

4. Use of a foam for the manufacture of wetsuits, wherein said foam is made from the foamable composition defined in any one of Claims 1-3

5. Use of the foam according to Claim 4, wherein the foam has a density, measured as described in the description, of 0.05 to 0.2 g/cm$^3$ (g/cc), a 60% modulus of 0.60 Kg/cm$^2$ to 1.50 Kg/cm$^2$, and a compression set of 15% to 35%, measured in accordance with ASTM D 395 method B.

6. Use of a laminate for the manufacture of wetsuits, wherein the laminate comprises the foam of Claim 4 or Claim 5.

7. A wetsuit comprising the foam defined in Claim 4 or Claim 5.

**Patentansprüche**

1. Verwendung einer schäumbaren Zusammensetzung für die Herstellung von Neoprenanzügen, die schäumbare Zusammensetzung umfassend:

a) ein oder mehrere Olefin-Blockcopolymere mit harten Blöcken in denen Ethylen in einer Menge größer als 95 Gewichtsprozent, basierend auf dem Gewicht des Polymers, vorhanden ist und weichen Blöcken in denen der Comonomer-Gehalt, entsprechend dem Gehalt von Monomeren, anders als Ethylen) größer als 5 Gewichtsprozent, basierend auf dem Gewicht des Polymers, ist, das/die Olefin-Blockcopolymer(e) mit einem Mw/Mn von 1,7 bis 3,5, und mindestens einem Schmelzpunkt, $T_m$, in Grad Celsius, und einer Dichte, d, in Gramm/Kubikzentimeter, wobei die numerischen Werte von $T_m$ und d dem Verhältnis entsprechen:

$$T_m > -2002,9 + 4538,5(d) - 2422,2(d)^2;$$

b) ein oder mehrere Olefin-Copolymere;
c) ein Öl;
d) ein Vernetzungsmittel; und
e) ein Treibmittel;

wobei das Olefin-Copolymer Ethylen-Propylen-Dien Monomergummi und/oder ein Ethylen/$\alpha$-Olefin-Copolymer umfasst,
wobei die Molekulargewichtsverteilung Mw/Mn durch Gelpermeationschromatographie, wie in der Beschreibung beschrieben, bestimmt wird; die Dichte, d, nach ASTM 792 gemessen wird; und der Schmelzpunkt, $T_m$, mittels Differential-Abtast-Kalorimetrie, wie in der Beschreibung beschrieben, bestimmt wird.

2. Verwendung der schäumbaren Zusammensetzung nach Anspruch 1, wobei eines oder mehrere der Olefin-Blockcopolymere Mesophase separiert ist und ein Delta-Comonomer größer als 18,5 mol% hat, wobei das Delta Comonomer die Differenz, in Molprozent Comonomer, zwischen dem harten Block und dem weichen Block des Olefin-Blockcopolymers ist.

3. Verwendung einer schäumbaren Zusammensetzung nach Anspruch 1 oder Anspruch 2, wobei

a) das Olefin-Blockcopolymer in einer Menge von 5 Gew.-% bis 40 Gew.-%, vorzugsweise 10 Gew.-% bis 30 Gew.-%, bevorzugter 10 Gew.-% bis 25 Gew.-% vorhanden ist;
b) der Ethylen-Propylen-Dien-Monomergummi in einer Menge von 5 Gew.-% bis 40 Gew.-%, vorzugsweise 5 Gew.-% bis 30 Gew.-% vorhanden ist;
c) das Mineralöl in einer Menge von 15 Gew.-% bis 45 Gew.-%, vorzugsweise von 20 Gew.-% bis 40 Gew.-%, bevorzugter von 25 Gew.-% bis 35 Gew.-% vorhanden ist;
d) das Vernetzungsmittel in einer Menge von 1 - 6 phr, vorzugsweise von 2 - 5 phr vorhanden ist;
e) das Treibmittel in einer Menge von 1 - 8 phr, vorzugsweise von 2 - 6 phr vorhanden ist.

4. Verwendung eines Schaums für die Herstellung von Neoprenanzügen, wobei der Schaum aus der schäumbaren Zusammensetzung, definiert in einem der Ansprüche 1 - 3, hergestellt wird.

5. Verwendung des Schaums nach Anspruch 4, wobei der Schaum eine Dichte, gemessen, wie in der Beschreibung beschrieben, von 0,05 bis 0,2 g/cm$^3$ (g/cc), ein 60 % Modul von 0,60 Kg/cm$^2$ bis 1,50 Kg/cm$^2$, und eine Druckverformung von 15% bis 35%, gemessen in Übereinstimmung mit ASTM D 935 Methode B, hat.

6. Verwendung eines Laminats für die Herstellung von Neoprenanzügen, wobei das Laminat den Schaum nach Anspruch 4 oder Anspruch 5 umfasst.

7. Neoprenanzug umfassend den Schaum definiert in Anspruch 4 oder Anspruch 5.

## Revendications

1. Utilisation d'une composition expansible pour la production de combinaisons de plongée, ladite composition expansible comprenant :

a) un ou plusieurs copolymères à blocs d'oléfines ayant des blocs durs dans lesquels l'éthylène est présent en une quantité supérieure à 95 pour cent en poids rapporté au poids du polymère, et des blocs mous dans lesquels la teneur en comonomères, correspondant à la teneur de monomères autres que l'éthylène est supérieure à 5 pour cent en poids rapporté au poids du polymère, ledit ou lesdits copolymère(s) à blocs d'oléfines ayant une Mw/Mn allant de 1,7 à 3,5, et au moins un point de fusion, Tm, en degrés Celsius, et une masse volumique, d, en grammes/centimètre cube, les valeurs numériques de Tm et d correspondant à la relation :

$$Tm > -2\,002,9 + 4\,538,5(d) - 2\,422,2(d)^2 \; ;$$

b) un ou plusieurs copolymères d'oléfines ;
c) une huile ;
d) un agent de réticulation ; et
e) un agent gonflant ;

dans laquelle le copolymère d'oléfines comprend un caoutchouc de monomères éthylène-propylène-diène et/ou un copolymère d'éthylène/$\alpha$-oléfine,
dans laquelle ladite distribution des masses moléculaires Mw/Mn est déterminée par chromatographie par perméation de gel tel que décrit dans la description ; ladite masse volumique, d, est mesurée selon l'ASTM 792 ; et ledit point de fusion, Tm, est déterminé par le biais de la calorimétrie différentielle à balayage tel que décrit dans la description.

2. Utilisation de la composition expansible selon la revendication 1, dans laquelle un ou plusieurs des copolymères à blocs d'oléfines sont séparés par une mésophase et ont un delta comonomère supérieur à 18,5 % en mol, ledit delta comonomère représentant la différence, en pour cent en mole de comonomère, entre le bloc dur et le bloc mou du copolymère à blocs d'oléfines.

3. Utilisation de la composition expansible selon la revendication 1 ou la revendication 2, dans laquelle

a) le copolymère à blocs d'oléfines est présent en une quantité de 5 % en poids à 40 % en poids, de préférence de 10 % en poids à 30 % en poids et de préférence encore de 10 % en poids à 25 % en poids ;
b) le caoutchouc de monomères éthylène-propylène-diène est présent en une quantité de 5 % en poids à 40 % en poids, de préférence de 5 % en poids à 30 % en poids ;
c) l'huile minérale est présente en une quantité de 15 % en poids à 45 % en poids, de préférence de 20 % en poids à 40 % en poids et de préférence encore de 25 % en poids à 35 % en poids ;
d) l'agent de réticulation est présent en une quantité de 1 à 6 pce, de préférence de 2 à 5 pce ;
e) l'agent gonflant est présent en une quantité de 1 à 8 pce, de préférence de 2 à 6 pce.

4. Utilisation d'une mousse pour la production de combinaisons de plongée, dans laquelle ladite mousse est fabriquée à partir de la composition expansible définie dans n'importe laquelle des revendications 1 à 3.

5. Utilisation de la mousse selon la revendication 4, dans laquelle la mousse a une masse volumique, mesurée tel que décrit dans la description, de 0,05 à 0,2 g/cm$^3$ (g/cc), un module à 60 % de 0,60 kg/cm$^2$ à 1,50 kg/cm$^2$, et une déformation rémanente à la compression de 15 % à 35 %, mesurée conformément à la méthode B de l'ASTM D 395.

6. Utilisation d'un stratifié pour la production de combinaisons de plongée, dans laquelle le stratifié comprend la mousse de la revendication 4 ou de la revendication 5.

7. Une combinaison de plongée comprenant la mousse définie dans la revendication 4 ou la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7858706 B2
- US 20090105417 A
- WO 2006099631 A
- WO 2009097560 A
- US 7947793 B
- US 7608668 B
- US 7858706 B
- US 7893166 B
- US 3644230 A

- US 4214054 A
- US 6103803 A
- US 3573152 A
- US 4824720 A
- US 4323528 A
- US 4152189 A, Guerin
- US 3660849 A
- US 4274158 A

**Non-patent literature cited in the description**

- **POTEMKIN.** *Physical Review E,* 1998, vol. 57 (6), 6902-6912
- **DOBRYNIN, J.** *Chem.Phvs.,* 1997, vol. 107 (21), 9234-9238
- **ZWEIFEL HANS et al.** Plastics Additives Handbook. Hanser Gardner Publications, 2001
- **SENDIJAREVIC et al.** Polymeric Foams And Foam Technology. Hanser Gardner Publications, 2004, 505-547
- **ZWEIFEL HANS et al.** Plastics Additives Handbook. Hanser Gardner Publications, 2001, 725-812
- Encyclopedia of Chemical Technology. Interscience Publishers, 1968, vol. 17
- **DANIEL SEERN.** Organic Peroxides. Wiley-Interscience, 1970, vol. 1
- Polyolefin Foam. **C. P. PARK.** Handbook of Polymer Foams and Technology. Hanser Publishers, 1991, 198-204
- **ZWEIFEL HANS et al.** Plastics Additives Handbook. Hanser Gardner Publications, 2001, 1-140

- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 901-948
- **ZWEIFEL HANS et al.** Plastics Additives Handbook. Hanser Gardner Publications, 2001, 511-552
- **ZWEIFEL HANS et al.** Plastics Additives Handbook. Hanser Gardner Publications, 2001, 627-646
- Polyolefin Foam. **C. P. PARK.** Handbook of Polymer Foams and Technology. Hanser Publishers, 1991
- **C. RAUWENDAAL.** Polymer Extrusion. Hanser Publishers, 1986, 322-334
- **RANDALL, J.C.** *JMS-Rev. Macromol. Chem. Phys.,* 1989, vol. C29, 201-317
- **WILLIAMS ; WARD.** *J. Polym. Sci., Polym. Let.,* 1968, vol. 6, 621